Europäisches Patentamt

European Patent Office

Office européen des brevets

(19)

(11) Veröffentlichungsnummer : **0 128 299**
**B1**

# (12) EUROPÄISCHE PATENTSCHRIFT

(45) Veröffentlichungstag der Patentschrift :
**15.03.89**

(21) Anmeldenummer : **84103994.4**

(22) Anmeldetag : **10.04.84**

(51) Int. Cl.⁴ : **F 02 M 25/06**, F 02 M 23/00,
F 02 M 23/08, F 02 M 25/12,
F 01 N 3/10

(54) Vorrichtung zum Einleiten von zusätzlichen Gasströmen in den Ansaugkanal einer gemischverdichtenden Brennkraftmaschine.

(30) Priorität : **11.04.83 DE 3312946**

(43) Veröffentlichungstag der Anmeldung :
**19.12.84 Patentblatt 84/51**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**DE--A-- 2 600 839
DE--A-- 2 713 274
DE--A-- 2 855 131
DE--A-- 3 008 652
DE--B-- 1 576 440
DE--B-- 1 576 442
DE--B-- 2 215 783
DE--B-- 2 402 970
US--A-- 3 846 980
Patent Abstracts of Japan Band 6, Nr. 124, 9. Juli 1982
& JP-A-57-49052
Patent Abstracts of Japan Band 6, Nr. 109, 19. Juni
1982 & JP-A-57-38651**

(73) Patentinhaber : **August, Paul, Dipl.-Ing. Dr.
C/Ballester
Barcelona (ES)**

**DODUCO KG. Dr. Eugen Dürrwächter
Im Altgefäll 12 Postfach 480
D-7530 Pforzheim (DE)**

(72) Erfinder : **August, Paul, Dr. h.c. Dipl.-Ing.
Bregenzer Strasse 49
A-6900 Bregenz (AT)**

(74) Vertreter : **Riebling, Peter, Dr.-Ing. et al
Patentanwälte Dr.-Ing., Dipl.-Ing., Ing.(grad.) Günter
Riebling Dr.-Ing., Dipl.-Ing. Peter Riebling Rennerle
10 Postfach 3160
D-8990 Lindau (DE)**

EP 0 128 299 B1

## Beschreibung

Die Erfindung betrifft eine Vorrichtung zum Einleiten von Gas in den Ansaugkanal einer gemischverdichtenden Brennkraftmaschine mit den Merkmalen der Oberbegriffs von Patentanspruch 1.

Eine derartige Vorrichtung beschreibt die DE-A 2 402 970. Die Verbindungsgerade der Mittelpunkte der beiden Schlitze schließt dort einen Winkel mit einer Teilungsfläche ein, die den Ansaugkanal teilt und durch Verschiebung der Längsachse der Drosselklappenwelle parallel zu sich entlang der Längsmittellinie des Ansaugkanals erzeugt wird. Damit ist aber der Nachteil verbunden, daß das sich hier bildende Kondensat nicht in optimaler Weise aufbereitet wird, insbesondere weil es Bereiche im Ansaugkanal gibt, die von den über die Schlitze zugeführten Gasen nicht vollständig bestrichen werden, so daß dort keine vollständige Vernebelung des Kondensats und Verwirbelung mit den zugeführten Gasen erfolgt.

Die US-A- 3 846 980 beschreibt eine Brennkraftmaschine mit Abgasrückführung, wobei das rückgeführte Abgas durch einen Katalysator zwecks Entgiftung der Abgase hindurchgeleitet wird.

Der Erfindung liegt die Aufgabe zugrunde, eine Vorrichtung mit den eingangs genannten Merkmalen so auszugestalten, daß der Wirkungsgrad einer damit ausgerüsteten Brennkraftmaschine weiter verbessert und der Anteil der giftigen Bestandteile im Abgas, insbesondere der Stickoxide, weiter gesenkt wird.

Diese Aufgabe wird durch das Kennzeichen von Patentanspruch 1 gelöst.

Die Erfindung nutzt die Beobachtung, daß sich nahe der Drosselklappe im Ansaugkanal der Brennkraftmaschine der Brennstoff — soweit es sich um eine Brennkraftmaschine mit Vergaser handelt — vorwiegend in jenem Umfangsbereich des Ansaugkanals an der Ansaugkanalwandung niederschlägt, wo die Öffnungsweite des Spalts zwischen der Drosselklappe und der Ansaugkanalwandung am größten ist, also in der Mitte zwischen den Enden der Drosselklappenwelle. Da der Spalt zwischen der Drosselklappe und der Ansaugkanalwandung nahe den Enden der Drosselklappenwelle im unteren und mittleren Teillastbetrieb der Brennkraftmaschine relativ eng ist, kann dort nur eine relativ geringe Menge des Brennstoff-Luft-Gemisches hindurchtreten und deshalb auch nur eine relativ geringe Menge des Brennstoffes in dem entsprechenden Umfangsbereich der Ansaugkanalwandung im Nahbereich der Drosselklappe kondensieren. Schlitze für Zusatzgas, welche im selben Umfangsbereich wie die Enden der Drosselklappenwelle angeordnet sind, tragen deshalb zur Vernebelung des Brennstoffs und zur Homogenisierung des Brennstoff-Luft-Gemisches nicht viel bei. Deshalb wird vorgesehen, die Schlitze so zu orientieren, daß sie in jenen beiden Umfangsbereichen der Ansaugkanalwandung liegen, wo die Öffnungsweite der sichelförmigen Schlitze· zwischen der Drosselklappe und der Ansaugkanalwandung am größten ist und sich am meisten Brennstoff an der Ansaugkanalwandung niederschlägt. Bei dieser Orientierung können die Schlitze ihre größte Wirksamkeit entfalten.

Überraschenderweise wurde ferner herausgefunden, daß die Anordnung solcher Schlitze nicht nur vorteilhaft ist für die Gemischaufbereitung in Brennkraftmaschinen, welche mit einem Vergaser ausgerüstet sind, sondern auch bei Brennkraftmaschinen, die mit einer Einspritzung des Brennstoffes sowie mit einer Zuführung von Spaltgas in den Ansaugkanal arbeiten.

Die Zuführung von Spaltgas in den Ansaugkanal einer Brennkraftmaschine ist nicht nur sinnvoll bei solchen Brennkraftmaschinen, die mit einer Einspritzung des Brennstoffs arbeiten, sie kann mit besonderem Vorteil auch angewendet werden bei Brennkraftmaschinen, welche mit Vergasern ausgerüstet sind. Es wird deshalb vorgeschlagen, die Zuleitung für das Gas, welches den Schlitzen zugeführt werden soll, vom Abgasstrang der Brennkraftmaschine abzweigen zu lassen und in dieser Zuleitung einen beheizten Katalysator, z. B. auf Platin-Basis oder auf Nickel-Basis anzuordnen, welcher durch chemisch-katalytische Umsetzung des im rückgeführten Abgasstrom enthaltenen Wasserdampfes mit anderen reaktionsfähigen Bestandteilen des Abgases, z. B. mit noch nicht vollständig verbrannten Kohlenwasserstoffen unter Energiezufuhr Wasserstoff erzeugt. Es wird also nicht eine einfache Abgasrückführung vorgeschlagen, sondern eine Rückführung von katalytisch aus Abgas gewonnenem Spaltgas ; der Wasserstoff, der im Spaltgas enthalten ist, verbessert die Zündfähigkeit des durch die Abgasrückführung abgemagerten Luft-Brennstoff-Gemisches und erlaubt so eine stärkere Abmagerung des Gemisches, als sie ohne die katalytische Behandlung des Abgases möglich wäre.

Als Spalt-Katalysator eignet sich zum Beispiel ein mit Platin oder Nickel beschichteter keramischer Körper, insbesondere ein solcher aus einer $Al_2O_3$-Keramik. Die Beheizung des Spaltkatalysators kann direkt durch elektrischen Strom, z. B. aus der Autobatterie, erfolgen, aber auch indirekt oder — bei Auswahl eines Katalysators mit hinreichend niedriger Arbeitstemperatur — durch den Abgasstrom selbst.

Das Zündverhalten des Gemisches wird dabei dadurch verbessert, daß man dem rückgeführten Abgas vor dem Katalysator einen Brennstoff beimischt, welcher zur katalytischen Gewinnung von Wasserstoff mit dem im Abgas enthaltenen Wasserdampf chemisch umgesetzt wird. Zweckmäßigerweise führt man denselben Brennstoff zu, der in der Brennkraftmaschine ohnehin verbrannt werden soll. Es ist jedoch auch möglich, wenn auch mit größerem Aufwand verbunden, andere Brennstoffe wie z. B. Alkohol, Erdgas oder ähnliches zuzuführen.

Anstelle eines Spaltkatalysators oder in Kombination mit einem Spaltkatalysator kann man zur Gewinnung von Wasserstoff aus den Abgasen auch einen thermischen Reaktor vorsehen, dessen innenliegende Oberfläche man vorzugsweise wenigstens zum Teil aus katalytisch wirksamem Material herstellt oder mit einem solchen Material beschichtet. Ein solcher thermischer Reaktor kann nicht allein durch die Abgase erwärmt werden, sondern bedarf einer zusätzlichen Beheizung, vorzugsweise auf elektrischem Wege.

Wenn man den Katalysator und/oder den Reaktor elektrisch beheizt, hat man die Möglichkeit, durch eine verhältnismäßig einfache Steuerung der Heizleistung das Ausmaß der Spaltgasproduktion zu steuern und den wechselnden Betriebsbedingungen der Brennkraftmaschine schnell und optimal anzupassen.

Die Rückführung von Spaltgas hat den Vorteil, daß durch Aufheizung des Brennstoff-Luft-Gemisches im Teillastbetrieb der Brennstoffverbrauch wegen der verringerten Drosselverluste gesenkt werden kann und daß man eine sichere Zündung und Durchbrennung des abgemagerten Brennstoff-Luft-Gemisches erzielt. Im Ergebnis erhält man deshalb einen verringerten Giftgasanteil in den Abgasen bei gleichzeitig gesenktem Brennstoffverbrauch.

Das Spaltgas bewirkt beim Durchströmen der Schlitze sowohl eine dynamische als auch thermische Aufbereitung des Brennstoffkondensats bei Brennkraftmaschinen mit Vergaser verbunden mit einer Homogenisierung des Gesamtgemisches, und durch den enthaltenen Wasserstoff eine sichere Zündung.

Bei Brennkraftmaschinen ohne Vergaser entfällt natürlich die Aufbereitung des Kraftstoffkondensats an der Ansaugkanalwand, doch führt auch dort die Homogenisierung des Abgas-Luft-Gemisches zu einer verbesserten Verbrennung. In allen Fällen wirken aber die Rückführung von Spaltgas und die Anordnung der Schlitze im Ansaugkanal im Sinne einer Kombination zusammen.

Die erfindungsgemäße Vorrichtung eignet sich auch zum Nachrüsten von Brennkraftmaschinen. Bei Anwendung auf Brennkraftmaschinen mit Vergaser kann man an der Vergaserunterseite ein flaches Unterteil, insbesondere eine Platte anbringen, in welcher ein Loch vorgesehen ist, welches einen Teil des Ansaugkanals bildet und in welchem die Schlitze und ein Teil der Zuleitung zu diesen ausgebildet ist. Die Vorrichtung kann recht einfach und preiswert sein, wenn man die Schlitze und die Zuleitung in die Oberseite des Unterteils z. B. durch Fräsen einarbeitet und dieses Unterteil dann an der Unterseite des Vergasers befestigt, wodurch die Vergaserunterseite die durch das Fräsen o.ä. gebildeten Ausnehmungen abdeckt und zu funktionsfähigen Schlitzen und zu einer funktionsfähigen Zuleitung ergänzt.

Im folgenden wird die Erfindung anhand von zwei Ausführungsbeispielen näher erläutert.

Es zeigen :

Figur 1 eine Vorrichtung zur Aufbereitung von flüssigen Brennstoffen für gemischverdichtende Brennkraftmaschinen mit Vergaser und zwar einem Schnitt gemäß der Linie I-I in Figur 2 durch das Vergaser-Unterteil,

Figur 2 den Längsschnitt II-II durch die in Figur 1 dargestellte Vorrichtung,

Figur 3 die schematisiert gezeichnete Gewinnung von Spaltgas aus dem Abgas der Brennkraftmaschine,

Figur 4 eine Vorrichtung zur Zuführung von Spaltgasen in den Ansaugkanal eines Ottomotors mit Saugrohreinspritzung des Brennstoffs, teilweise im Schnitt,

Figur 5 den Querschnitt V-V durch die in Fig. 4 dargestellte Vorrichtung, und

Figur 6 den Querschnitt durch das die erfindungsgemäßen Schlitze tragende Einbauteil, und zwar entlang der Schnittlinie VI-VI gemäß Figur 5.

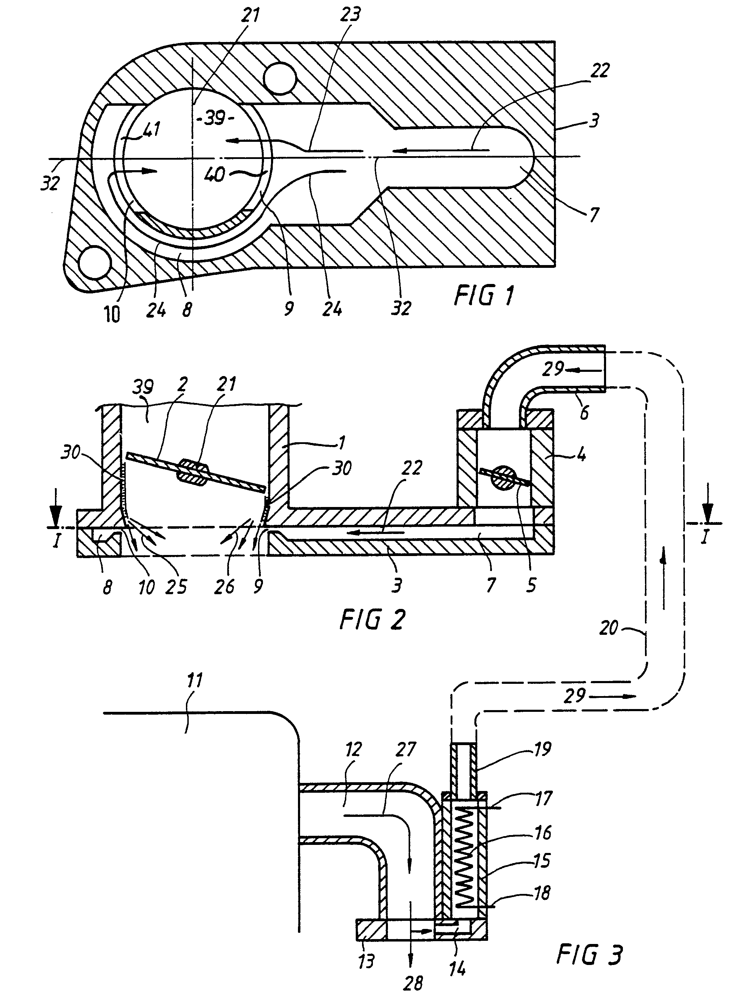

Bei dem in Figur 1 bis 3 dargestellten Ausführungsbeispiel ist an die Unterseite des Vergasers 1 der Brennkraftmaschine 11 ein flaches Zusatzteil 3 angeflanscht, in welchem ein kreisförmiger Durchgang als Fortsetzung des Ansaugkanals 39 des Vergasers vorgesehen ist. Dieser kreisförmige Durchgang ist umgeben von zwei sich gegenüberliegenden und sich in Umfangsrichtung des Ansaugkanals 39 erstreckenden, kreissegmentförmigen Schlitzen 9 und 10, denen über eine Zuleitung Spaltgas zugeführt wird. Die Zuleitung besteht aus einem beide Schlitze 9, 10 verbindenden, den Ansaugkanal weitgehend umschließenden Ringkanal 8 und einem daran anschließenden, flachen, im Zusatzteil 3 verlaufenden Kanal 7 welcher sich in einen am Zusatzteil 3 angebauten Anschlußstutzen 4 fortsetzt, in welchem eine Drosselklappe 5 angeordnet ist. An den Anschlußstutzen 4 schließen sich ein Rohr 6 und ggfs. weitere Zuleitungsabschnitte 14, 15, 19 und 20 an.

Diese Drosselklappe 5 ist bei Leerlaufbetrieb der Brennkraftmaschine geschlossen ; ihre Stellung hängt vom Unterdruck im Ansaugkanal 39 ab und zu diesem Zweck kann die Drosselklappe 5 mit der Drosselklappe 2 des Vergasers 1 in der Weise in mechanischer Verbindung stehen, daß sie geöffnet wird, wenn die Drosselklappe 2 beim Übergang vom Leerlaufbetrieb zum Teillast- und Vollastbetrieb geöffnet wird.

Man könnte die Drosselklappe 5 aber auch mittels einer Unterdruckdose steuern, welche auf den Unterdruck im Ansaugkanal 39 anspricht. Die Drosselklappe 2 des Vergasers findet sich stromauf der Schlitze 9, 10 nahe bei diesen im Ansaugkanal 39.

Das über die geöffnete Drosselklappe 5 in der Richtung des Pfeils 22 eintretende Gas wird von der Brennkraftmaschine angesaugt und durchströmt den Kanal 7 und den Ringkanal 8. Im Bereich des Kanals 7 kommt es zu einer Aufteilung des Gasstromes, der zu einem Teil in Richtung des Pfeils 23 durch den Schlitz 9 in den Ansaugkanal 39 strömt, während der andere Gasstrom mit geringer Zeitverzögerung in Richtung des Pfeils 24 durch den gegenüberliegenden Schlitz 10 in den Ansaugkanal 39 einströmt.

Wie sich aus der Darstellung in Figur 1 hinsichtlich der eingezeichneten Pfeile 23 und 24 ergibt, sind die beiden kreissegmentartig ausgebildeten Schlitze 9, 10 einander diametral gegenüberliegend angeordnet, und zwar symmetrisch zu der durch Verschiebung der Längsachse der Drosselklappenwelle 21 parallel zu sich selbst entlang der Längsmittellinie des Ansaugkanals 39 erzeugten, gedachten Teilungsfläche des Ansaugkanals 39 (welche bei zylindrischem Ausgangskanal eine Ebene ist). Die Verbindungsgerade 32 der beiden Mittelpunkte 40, 41 der Schlitze 9 bzw. 10 scheidet diese gedachte Teilungsfläche unter einem rechten Winkel. Stromab der Drosselklappe 2 schlägt sich an jenen Bereichen der Wandung des Ansaugkanals 39, wo sich im Teillastbetrieb, also bei geringerer Öffnung bis ungefähr zu einer 3/4-Öffnung der Drosselklappe 2, die größte Weite der sichelförmigen Durchgänge für das Brennstoff-Luftgemisch befindet, der größte Anteil an Brennstoffkondensat 30 nieder, und gerade in diesen Bereichen sind erfindungsgemäß die beiden Schlitze 9, 10 angeordnet.

Beidseits der Drosselklappenwelle 21 bilden sich nämlich beim Öffnen der Drosselklappe 2 zwischen dieser und der Wand des Ansaugkanals 39 zuerst enge und dann immer weiter werdende sichelförmige Öffnungen, durch die das Brennstoff-Luft-Gemisch strömt. Bei Teillastbetrieb sind diese Öffnungen so schmal, daß sich das Gemisch so nahe an der Ansaugkanalwand hindurchzwängen muß, daß der im Gemisch enthaltende Brennstoff zum Teil an der Ansaugkanalwand kondensiert.

Da bei Teillastbetrieb die beiden sich zwischen der Drosselklappe 2 und der Ansaugkanalwand bildenden sichelförmigen Öffnungen nahe bei den Enden der Drosselklappenwelle 21 sehr eng sind, geht dort sehr wenig Gemisch und damit Brennstoff hindurch. Eine Kondensataufbereitung an jener Stelle des Ansaugkanalumfangs, z. B. durch einen umlaufenden Ringschlitz, würde nur ca. die Hälfte der Strömungsenergie im zugeführten Hilfsgas an den richtigen und notwendigen Stellen zur Wirkung bringen und den Aufbereitungseffekt im unteren Bereich des Teillastbetriebs (z. B. bei Stadtverkehr) auf ein Minimum bringen.

Demnach ist die Ausbildung und geometrische Anordnung der Schlitze 9, 10 in der Ansaugkanalwand in Abhängigkeit von der Orientierung der Drosselklappenwelle 21 und vom Ort der maximalen Kondensatbildung sehr wichtig.

Die Schlitze 9 und 10 sind in ihrem Querschnitt so bemessen, daß schon ab einer geringen Drehzahl der Brennkraftmaschine 11 die Drosselklappe 5 einen größeren Durchgang freigibt und daher nicht mehr querschnittsbegrenzend für den Gasdurchsatz im Anschlußstutzen 4 wirkt.

Das Rohr 6, der Kanal 7 und der Ringkanal 8 haben einen größeren Durchgangsquerschnitt als die Schlitze 9 und 10 und deshalb wirken die letztgenannten als Meßquerschnitt (d. h. als einzige Begrenzung) für den Gasdurchsatz ab etwa einer Fahrgeschwindigkeit von 80-100 km/h, wodurch das aus den Schlitzen 9 und 10 austretende Gas Geschwindigkeiten von 100 m/s und mehr erreicht.

Ein besonders guter thermischer Wirkungsgrad der Brennkraftmaschine, eine Verringerung des Brennstoffbedarfs und eine Senkung der Giftgasanteile im Abgas werden erzielt, wenn man ein durch katalytische Aufbereitung eines Teils der Abgase erzeugtes Spaltgas über das Rohr 6 und den Anschlußstutzen 4 zu den Schlitzen 9 und 10 führt. Die in Figur 3 gezeigte Brennkraftmaschine 11 weist einen Abgaskrümmer 12 auf, der über einen Flansch 13 in nicht näher dargestellter Weise in den Auspuff-Schalldämpfer übergeht. Von den im Abgaskrümmer 12 in Richtung des Pfeils 27 strömenden Abgasen wird im Bereich des Flansches 13 in Richtung des Pfeils 28 ein Teil abgezweigt, welcher dort in einen Kanal 14 einströmt, der den Eingang zu einem thermisch-katalytischen Reaktor 15 bildet der rückseitig auf dem Flansch 13 befestigt ist.

Im Reaktor 15 ist ein Heizdraht 16 aus einem katalytisch wirkenden Metall angebracht, der über elektrische Leitungen 17 und 18 mit elektrischer Energie z. B. von der Autobatterie versorgt wird. Durch die Energiezufuhr und die gleichzeitige Einwirkung des Katalysators auf die rückgeführten Abgase kommt es zu einer chemischkatalytischen Reaktion des in den Abgasen enthaltenen Wasserdampfs mit den in den Abgasen noch enthaltenen unverbrannten Kohlenwasserstoffen und Kohlenmonoxidresten, wodurch Wasserstoff freigesetzt wird.

Der Ausgangsstutzen 19 des Reaktors 15 ist über eine Verbindungsleitung 20 mit dem Rohr 6 des Vergaserzusatzteils 3 verbunden. In der Verbindungsleitung 20 strömt das Spaltgas in der Richtung des Pfeils 29.

Die innenliegende Oberfläche des Reaktors 15 kann zur besseren katalytischen Wirkung des Reaktors mit einem als Spaltkatalysator wirkendem Material wie z. B. Nickel versehen sein. Dem Reaktor 15 werden nicht nur Abgase, sondern zusätzlicher Brennstoff wie Erdgas oder Alkohol, insbesondere jedoch Benzin zugeführt; hierdurch erreicht man, daß ein größerer Anteil des in den Abgasen enthaltenen Wasserdampfs zur Gewinnung von Wasserstoff chemisch umgesetzt wird, wobei der Wasserstoff den Verbrennungsvorgang günstig beeinflußt.

Anstelle eines thermisch-katalytischen Reaktors 15 kann man auch einen Spaltkatalysator vorsehen, welchen man zweckmäßigerweise elektrisch beheizt und welcher aus einem gasdurchlässigen Körper aus einer mit katalytisch wirkendem Metall (z. B. Platin oder Nickel) beschichteten Keramik (z. B. aus $Al_2O_3$) bestehen könnte, welcher in einer von den Abgasen durchströmten Kammer untergebracht ist. Das in Richtung des Pfeils 22 in den Kanal 7 einströmende Spaltgas, entfaltet an den einander gegenüberliegenden Schlitzen 9, 10 eine starke kondensatabhebende Wirkung, das heißt, das an der Wandung des Ansaugkanals 39 entlangkriechende Brennstoffkondensat wird in Richtung der Pfeile 25 und 26 fein vernebelt und von der Wandung des Ansaugkanals 39 abgehoben. Dadurch wird eine dynamische und thermische Feinstvernebelung des Brennstoffes und eine Homogenisierung des Brennstoff-Luft-Gemisches erreicht. Durch die Zufuhr von Spaltgas erreicht man wegen des Wasserstoffanteiles im Spaltgas eine gute Zündung eines so stark abgemagerten Gemisches, welches ohne das eingeführte Spaltgas kaum zündfähig wäre. Außerdem werden die Stickoxide $NO_x$ im Abgas durch die Rückführung von nicht brennbarem Stickstoff aus dem Abgas in das Vergaser-Zusatzteil 3 drastisch gesenkt.

Nach durchgeführten Untersuchungen mit Wasserstoffbeigabe im Teillastbetrieb eines Benzinmotors werden nur ca. 1 kg Wasserstoff zu 25 kg Benzin benötigt, um sehr niedrige Anteile von C0, Kohlenwasserstoffen und von $NO_x$ im Abgas zu erreichen. Diese Menge lässt sich aus etwa 1/4 des Wasserdampfanteils im Abgas durch katalytisch-chemische Umsetzung gewinnen.

Vorzugsweise begrenzt man die Spaltgaszuführung durch die Schlitze 9, 10 so, daß der Bedarf an Wasserstoff im rückgeführten Abgas einer Menge entspricht, die bei einer Fahrgeschwindigkeit von 80-100km/h entsteht.

Als Beispiel : ein moderner Mittelklassewagen benötigt eine Leistung von ca. 18 KW bei einer Fahrgeschwindigkeit von 100 km/h. Mit der erfindungsgemäßen Gemischaufbereitung werden hierfür ca. 4 kg Benzin pro Stunde verbraucht. Die Schlitze 9, 10 sind so bemessen, daß mit dem zugeführten Spaltgas 0,04 kg Wasserstoff den Weg durch die Schlitze 9, 10 nehmen. Bei höherer Belastung (Motorleistung) nimmt dann der relative Wasserstoffanteil im Benzin ab, bei geringerer Leistung wird die Menge des zugeführten Spaltgases mittels der Drosselklappe 5 gesteuert. So ergibt sich im Hauptfahrbereich bei Teillastbetrieb eine hohe Austrittsgeschwindigkeit des rückgeführten Gases an den Schlitzen 9, 10 und damit eine gute Aufbereitung des an der Ansaugkanalwand kondensierten Benzins sowie eine homogene Durchmischung beider Gasströme im Ansaugkanal 39. Dies ist sehr wichtig, damit alle Zylinder der Brennkraftmaschine 11 ein gleichmäßig zusammengesetztes Brennstoff-Luft- HilfsgasGemisch erhalten.

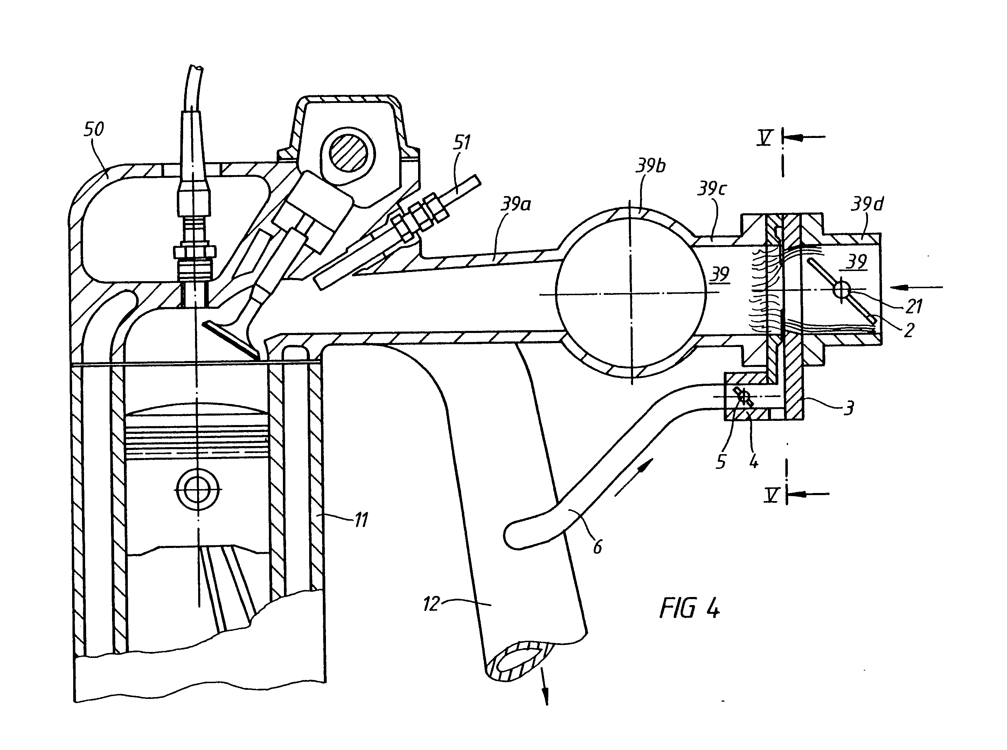

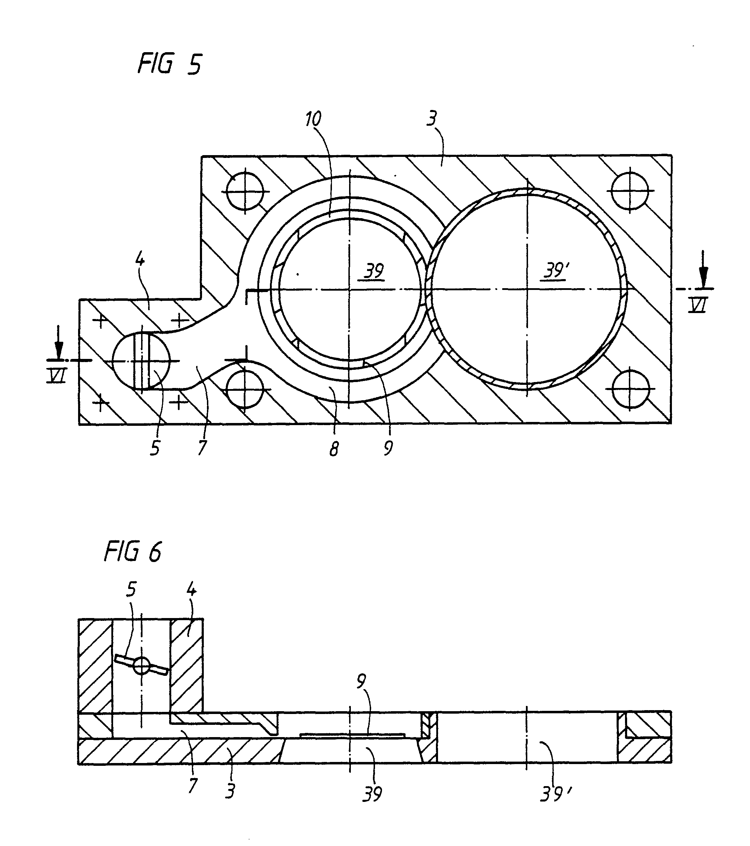

Bei dem in den Fig. 4-6 dargestellten zweiten Ausführungsbeispiel sind Teile, die Teilen des ersten Ausführungsbeispiels entsprechen, mit übereinstimmenden Bezugszahlen bezeichnet.

Bei der in Fig. 4 dargestellten Brennkraftmaschine 11 handelt es sich um einen Otto-Motor mit Saugrohreinspritzung des Brennstoffs.

Man erkennt ein vom Zylinderkopf 50 des Motors 11 seitlich abgehendes Ansaugrohr 39a, welches von einem Sammelsaugrohr 39b abzweigt, welches die Ansaugrohre 39a der verschiedenen Zylinder des Motors 11 miteinander verbindet. Am Sammelsaugrohr 39b befindet sich ein DoppelAnsaugstutzen 39c, an welchen unter Zwischenfügung eines erfindungsgemäßen Zusatzteils 3 für die Spaltgaszuführung ein doppeltes Luftansaugrohr 39d mit zwei parallelen Luftansaugkanälen 39 und 39' angeflanscht ist. Stromauf des Zusatzteils 3 befindet sich in jedem der Ansaugkanäle 39 eine Drosselklappe 2. Das Zusatzteil besitzt nebeneinander zwei kreisförmige Durchgangsöffnungen, diametral gegenüberliegend in einen der beiden Ansaugkanäle, nämlich in den Ansaugkanal 39 einmünden. Die beiden Schlitze 9 und 10 stehen über einen Ringkanal 8 und einen Kanal 7 in Verbindung mit einem Anschlußstutzen 4 des Zusatzteils 3 ; zum Eingang des Anschlußstutzens 4 führt eine Zuleitung 6, welche vom Abgasstrang 12 des Motors 11 abzweigt. Im Anschlußstutzen 4 befindet sich eine Drosselklappe 5, mit welcher sich in Abhängigkeit vom Unterdruck im Ansaugkanal 39 der Durchsatz des zugeführten Spaltgases steuern läßt.

Wie anhand des ersten Ausführungsbeispieles beschrieben, treten bereits bei den verhältnismäßig niedrigen Motordrehzahlen im Übergangsbereich zwischen dem Leerlaufbetrieb und dem Teillastbetrieb die Spaltgase mit hoher Geschwindigkeit durch die Schlitze 9 und 10 in den Ansaugkanal 39 ein und vermischen sich infolge der hohen Einströmgeschwindigkeit sehr homogen mit der angesaugten Verbrennungsluft. Um eine hohe Einströmgeschwindigkeit der Spaltgase zu gewährleisten, ist der Querschnitt der Durchgangsöffnung im Zusatzteil 3 an jener Stelle, wo sich die Schlitze 9 und 10 befinden, gegenüber dem Querschnitt des davor liegenden Abschnitts des Ansaugkanals verengt, wodurch sich die Wirkungsweise einer Venturidüse einstellt. Dies ist von besonderem Vorteil beim Vollastbetrieb des Motors, wenn der Unterdruck im Ansaugkanal 39 nicht mehr so stark ist, sowie bei Einspritzmotoren, die mit einem Turbolader ausgerüstet sind.

Beim gezeichneten Ausführungsbeispiel werden die Spaltgase nur in einen der beiden Ansaugkanäle 39 und 39' zurückgeführt, es ist jedoch im Rahmen der Erfindung ohne weiteres möglich, die Spaltgase in beide Ansaugkanäle 39 und 39' einzuspeisen ; man muss dann lediglich in beiden Ansaugkanälen Schlitze vorsehen, denen die Spaltgase entströmen können.

Die Spaltgaszuführung durch die Schlitze 9 und 10 bewirkt eine homogene Vermischung der Spaltgase mit der Verbrennungsluft, und in dieses homogene Gemisch wird am Ende des Ansaugrohrs 39a aus der dort angeordneten Einspritzdüse 51 der Brennstoff eingespritzt.

In entsprechender Weise, wie es im Zusammenhang mit dem ersten Ausführungsbeispiel beschrieben wurde, werden auch im zweiten Ausführungsbeispiel die rückgeführten Abgase auf dem Weg vom Abgasstrang 12 zum Anschlußstutzen 4 über einen Spaltkatalysator oder über einen thermischen Reaktor oder über eine Kombination von beiden geführt, um der Verbrennungsluft anstelle von Abgas ein wasserstoffhaltiges Spaltgas beizumischen ; dabei wird — wie weiter vorne beschrieben — die Wasserstoffgewinnung begünstigt, indem man dem Katalysator und/oder dem Reaktor ausser dem Abgas auch noch einen Brennstoff zuführt.

5

**Patentansprüche**

1. Vorrichtung zum Einleiten von Gas in den Ansaugkanal (39) einer gemischverdichtenden Brennkraftmaschine mittels zweier sich in der Ansaugkanalwandung stromab einer Drosselklappe (2) mit einer Drosselklappenwelle (21) gegenüberliegenden, sich in Umfangsrichtung des Ansaugkanals (39) über einen Umfangswinkel von jeweils weniger als 180° erstreckender Schlitze (9, 10), welchen das Gas durch eine Zuleitung (6, 7) zugeführt wird, wobei zur Steuerung des Durchsatzes des Gases durch diese Zuleitung (6, 7) in Abhängigkeit von dem im Ansaugkanal (39) herrschenden Unterdruck in der Zuleitung (6, 7) ein Steuerorgan (5) vorgesehen ist, dadurch gekennzeichnet, daß die Verbindungsgerade (32) der beiden Mittelpunkte (40, 41) der Schlitze (9, 10) eine gedachte Teilungsebene des Ansaugkanals (39), in der die Längsachse der Drosselklappenwelle (21) und die Längsmittellinie des Ansaugkanals (39) liegen, unter einem rechten Winkel schneidet, daß das Gas Spaltgas ist und in der Zuleitung (6, 7) zur Erzeugung des Spaltgases aus rückgeführten Abgas ein thermischer Reaktor (15) und/oder ein beheizter Spaltkatalysator (16) angeordnet ist, und in die Zuleitung stromauf von dem Reaktor (15) bzw. dem Spaltkatalysator (16) eine Brennstoffeinspeisung vorgesehen ist.

2. Vorrichtung nach Anspruch 1, dadurch gekennzeichnet, daß die innenliegende Oberfläche des Reaktors (15) wenigstens teilweise aus katalytisch wirksamem Material besteht oder mit einem katalytisch wirksamen Material beschichtet ist.

3. Vorrichtung nach Anspruch 1 oder 2, dadurch gekennzeichnet, daß zur Beheizung des Spaltkatalysators (16) und der rückgeführten Abgase in der die Abgase zurückführenden Leitung stromauf vom Spaltkatalysator (16) ein Heizelement, insbesondere eine Heizspirale angebracht ist.

**Claims**

1. A device for introducing gas into the induction passage (39) of a mixture-compressing internal combustion engine via two slots (9, 10) situated opposite to each other in the induction passage wall downstream of a throttle valve (2) with a throttle valve spindle (21) and extending in the circumferential direction of the induction passage (39) over a circumferential angle of less than 180° in each case, to which the gas is fed via a supply line (6, 7) a control element (5) being provided in the supply line (6, 7) for controlling the throughflow of the gas through this supply line (6, 7) as a function of the negative pressure prevailing in the induction passage (39) characterised in that the straight line (32) connecting the two centres (40, 41) of the slots (9, 10) intersects at right angles an imaginary plane of separation of the induction passage (39) in which lie the longitudinal axis of the throttle valve spindle (21) and the longitudinal centre line of the induction passage (39), that the gas is dissociation gas and that a thermal reactor (15) and/or a heated dissociation catalyst (16) for production of the dissociation gas from recycled exhaust gas is/are situated in the supply line (6, 7), and that a fuel feed system is provided in the supply line upstream of the reactor (15) or dissociation catalyst (16).

2. A device according to claim 1, characterised in that the internally situated surface of the reactor (15) is formed at least in part by catalytically active material or is coated with a catalytically active material.

3. A device according to claim 1 or 2, characterised in that a heating element, in particular a heating coil, is installed upstream of the dissociation catalyst (16) in the pipe recycling the exhaust gases for heating the dissociation catalyst (16) and the recycled exhaust gases.

**Revendications**

1. Dispositif pour introduire un gaz dans le conduit d'admission (39) d'un moteur à combustion interne à compression du mélange air-carburant, au moyen de deux fentes (9, 10), qui sont disposées en vis-à-vis dans la paroi du conduit d'admission, en aval d'un papillon (2) comportant un arbre (21), et qui s'étendent dans le sens de la circonférence du conduit d'admission (39), chacune sur un angle circonférentiel inférieur à 180°, fentes auxquelles le gaz est envoyé au moyen d'une canalisation d'amenée (6, 7), auquel cas il est prévu, dans la canalisation d'amenée (6, 7), un organe de commande (5) servant à régler le débit du gaz dans cette canalisation d'amenée en fonction de la dépression régnant dans le conduit d'admission (39), caractérisé en ce que la droite (32) reliant les deux points médians (40, 41) des fentes (9, 10) recoupe à angle droit un plan imaginaire de subdivision du conduit d'admission (39), dans lequel l'axe longitudinal de l'arbre (21) du papillon et l'axe médian longitudinal du conduit d'admission (39) sont situés, en ce que le gaz est un gaz de craquage et en ce que dans la canalisation d'amenée (6, 7) se trouve disposé, pour la production du gaz de craquage à partir des gaz d'échappement recyclés, un réacteur thermique (15) et/ou un catalyseur de craquage chauffé (16), et qu'il est prévu une injection de carburant dans la canalisation d'amenée en amont du réacteur (15) ou du catalyseur de craquage (16).

2. Dispositif selon la revendication 1, caractérisé en ce que la surface intérieure du réacteur (15) est constituée au moins partiellement en un matériau ayant une action catalytique ou est recouverte par un matériau ayant une action catalytique.

3. Dispositif selon la revendication 1 ou 2, caractérisé en ce que pour chauffer le catalyseur de craquage (16) et les gaz d'échappement recyclés, un élément chauffant, notamment un filament chauffant hélicoïdal, est disposé dans le conduit de recyclage des gaz d'échappement, en amont du catalyseur de craquage (16).

FIG 1

FIG 2

FIG 3

FIG 4

FIG 5

FIG 6